# FASCICULE DE BREVET EUROPEEN

(11) **EP 3 065 908 B1**
(45) Date de publication et mention de la délivrance du brevet: **02.01.2019**
(21) Numéro de dépôt: 14809458.4
(22) Date de dépôt: 04.11.2014
(51) Int. Cl.: B23K 9/04, B23K 9/12, B23K 9/167, B23K 9/173, B23K 35/38

(54) **PROCEDE DE RECHARGEMENT A L'ARC ELECTRIQUE AVEC PROTECTION GAZEUSE CONSTITUE D'UN MELANGE GAZEUX ARGON/HELIUM**
VERFAHREN FÜR LICHTBOGEN-OBERFLÄCHENBEHANDLUNG MIT GASSCHUTZ AUS EINEM ARGON-/HELIUMGEMISCH
METHOD OF ELECTRIC ARC SURFACING WITH GAS PROTECTION CONSISTING OF AN ARGON/HELIUM GAS MIXTURE

(30) Priorité: 07.11.2013 FR 1360884
(43) Date de publication de la demande: 14.09.2016
(73) Titulaire: L'Air Liquide Société Anonyme pour l'Etude et l'Exploitation des Procédés Georges Claude, 75007 Paris (FR)
(72) Inventeur: PLANCKAERT, Jean-Pierre, F-60240 Monneville (FR)
(74) Mandataire: Debecker, Isabelle Virginie
(86) Numéro de dépôt international: PCT/FR2014/052794
(87) Numéro de publication internationale: WO 2015/067882

(56) Documents cités:
- EP-A1- 1 736 270
- JP-A- 2013 086 136
- DATABASE WPI Week 201356 Thomson Scientific, London, GB; AN 2013-M41067 XP002727885, -& JP 2013 158792 A (DAIDO TOKUSHUKO KK) 19 août 2013 (2013-08-19)

## Description

L'invention concerne un procédé de rechargement TIG d'au moins une partie d'une pièce métallique conformément au préambule de la revendication 1 (voir, par exemple, JP-A-2013158792), une productivité et des aspects de dépôts grandement améliorés.

Le rechargement, « *cladding* » en anglais, est un procédé consistant à revêtir une pièce, ou une partie d'une pièce, ou substrat, d'un dépôt, la liaison entre le dépôt de rechargement et le substrat étant réalisée électriquement, mécaniquement ou thermiquement selon la nature des matériaux mis enjeu.

En général, les opérations de rechargement ont lieu lors de la fabrication ou la maintenance des pièces. Ces opérations sont principalement effectuées pour améliorer la résistance des pièces à diverses sollicitations, telles que l'abrasion, la pression, la corrosion, ou pour réparer des pièces soumises à des conditions d'usure sévères. La protection de tuyaux contre la corrosion ou le rechargement surfacique de valves sont des exemples d'applications.

Le revêtement et le substrat sont le plus souvent formés de matériaux métalliques, le matériau de rechargement pouvant être selon le cas identique ou distinct de celui du substrat. La composition du dépôt de rechargement est définie et contrôlée pour être la mieux adaptée aux conditions d'utilisation.

La plupart des procédés de soudage conventionnels peuvent être utilisés pour réaliser des dépôts de rechargement. Le rechargement est alors opéré par fusion de la surface d'un substrat métallique de manière à produire un bain de métal fondu, et fusion d'un matériau métallique d'apport apporté dans le bain de métal fondu de manière à le lier au métal de base du substrat et à créer le dépôt de rechargement. On peut par exemple citer le rechargement par soudage à l'électrode enrobée, soudage MIG/MAG (acronymes de « *Métal Inert Gas* » et « *Métal Active Gas* » en anglais), soudage plasma et soudage TIG (acronyme de « *Tungsten Inert Gas* » en anglais).

Toutefois, aucun des procédés existants ne donne entière satisfaction.

Ainsi, bien qu'il soit relativement simple et flexible, le soudage à l'électrode implique la formation d'un laitier adhérant à la surface du dépôt de rechargement, ce laitier devant être retiré après chaque passe. En outre, le soudage à l'électrode conduit à des taux de dépôt typiquement entre 0,5 à 2 kg/h, et des taux de dilution élevés du métal d'apport par le métal du substrat, de l'ordre de 30 à 50 %.

A noter que la dilution est le mélange inévitable entre le métal de base et le métal d'apport déposé pendant le soudage. Le but est la minimisation de cette dilution pour optimiser les caractéristiques du dépôt du rechargement.

Typiquement, des taux de dilution de 5 à 20 %, de préférence inférieurs à 10 %, sont considérées comme faibles, alors que des taux de dilution de plus de 30 %, voire plus de 50 % sont élevés.

S'agissant du taux de dépôt, des valeurs de l'ordre de 2 kg/h au plus sont faibles. On entend par taux de dépôt élevés de taux d'au moins 5 kg/h, de préférence au moins 6 kg/h.

Le rechargement par soudage MIG/MAG implique souvent d'utiliser un fil fourré en tant qu'électrode fusible, les matériaux souhaités pour constituer le dépôt de rechargement n'étant pas disponibles en fil plein. Ceci conduit aussi à la formation d'un laitier qui doit être retiré avant d'effectuer la ou les passes suivantes. Les taux de dépôt obtenus sont élevés, en général entre 5 et 6,5 kg/h, mais le soudage MIG/MAG conduit à de forts taux de dilution, de l'ordre de 30 à 50 %.

Quant au rechargement par plasma, il conduit à des taux de dilution bas et de faibles déformations du substrat, du fait d'un contrôle fin de l'apport de chaleur. Toutefois, le procédé est de mise en oeuvre complexe et de coût élevé, l'équipement nécessitant la combinaison d'un système de chauffage pour fondre le métal d'apport et d'une torche plasma pour fondre le métal de base.

Le rechargement TIG repose sur l'utilisation d'un arc électrique établi entre l'électrode non fusible et le substrat à revêtir, l'extrémité d'un fil métallique fusible étant fondue par l'arc de manière à fournir du métal d'apport au bain en fusion et à créer le dépôt. Le TIG produit des dépôts avec des taux de dilution bas, typiquement de 5 à 20 %, et de faibles déformations du substrat à recharger du fait d'un échauffement moindre du substrat.

Le document JP-A-2013158792 divulgue un procédé de rechargement à l'arc électrique TIG avec fil d'apport fusible. Le document EP-A-1736270 divulgue un procédé de soudage TIG avec fil d'apport fusible. Le document JP-A-2013086136 divulgue un procédé de soudage TIG sans fil d'apport.

Toutefois, le rechargement TIG conduit à des taux de dépôt classiquement limités à des valeurs de l'ordre de 2 à 2.5 kg/h, essentiellement du fait du faible apport de chaleur fourni par l'arc au substrat. Ceci nuit à la productivité du procédé TIG pour le rechargement, essentiellement gouvernée par le taux de dépôt.

En outre, le procédé TIG requiert un contrôle précis de la distance séparant les cordons successivement réalisés et juxtaposés de manière à former le dépôt. Si un tel contrôle n'est pas opéré, en particulier si la distance entre cordons est trop grande, les cordons déposés présentent un mauvais mouillage et un aspect irrégulier. Les précautions particulières devant être mises en oeuvre nuisent aussi à la productivité globale du procédé de rechargement TIG.

Au vu de cela, le problème à résoudre est de pallier tout ou partie des inconvénients mentionnés ci-dessus. Un but de la présente invention est notamment de proposer un procédé de rechargement à productivité améliorée, en réalisant des dépôts de rechargement avec des taux de dépôt élevés, notamment d'au moins 4 kg/h, tout en améliorant la morphologie des dépôts réalisés en termes de mouillage et de profil de pénétration.

La solution de l'invention est alors un procédé de rechargement d'au moins une partie d'une pièce métallique tel que défini dans la revendication 1.

Par ailleurs, selon le mode de réalisation considéré, l'invention peut comprendre l'une ou plusieurs des caractéristiques suivantes :
- ledit mélange gazeux contient au plus 50 % d'hélium (% en volume).
- ledit mélange gazeux contient au plus 30 % d'hélium (% en volume).
- le mélange gazeux de protection est constitué de 20 % d'hélium et de 80 % d'argon (% en volume).
- le mélange gazeux de protection est constitué de 70 % d'hélium et de 30 % d'argon (% en volume).
- l'extrémité du fil d'apport est guidée de manière à former un angle compris entre 5 et 50° par rapport à l'axe de l'électrode.
- l'extrémité du fil d'apport est guidée de manière à former un angle compris entre 10 et 25° par rapport à l'axe de l'électrode.
- l'électrode non fusible est en tungstène.
- la pièce à recharger et/ou le dépôt métallique déposé sur ladite pièce est en acier au carbone, en acier inoxydable, en alliage base nickel ou en alliage base cobalt.
- le dépôt métallique a une épaisseur comprise entre 1 et 20 mm, de préférence entre 5 et 15 mm.

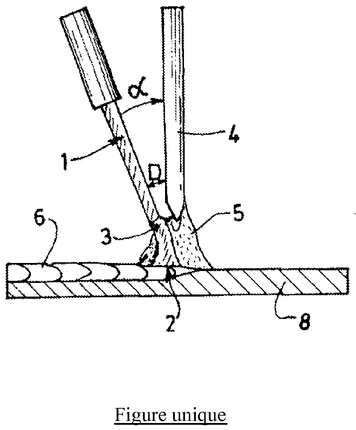

L'invention va maintenant être mieux comprise grâce à la description détaillée suivante faite en référence à la Figure unique annexée illustrant un mode de réalisation du procédé selon l'invention.

Comme on le voit sur la Figure, le procédé de rechargement selon l'invention met en oeuvre une électrode 4 non fusible et un fil d'apport 1 métallique fusible agencée en regard d'au moins une pièce 8 à recharger. De préférence, l'électrode 4 est en tungstène et son extrémité est formée d'une pointe présentant la forme d'un cône de révolution dont l'angle d'ouverture est typiquement compris entre 20 et 40°.

L'électrode 4 est alimentée en courant de manière à établir un arc électrique 5 entre ladite électrode 4 et la pièce 8. L'apport de chaleur de l'arc électrique 5 permet de fondre la surface de la pièce 8, typiquement sur une profondeur de l'ordre de 1 à 3 mm, et de générer un bain de métal fondu 2.

Outre le métal constitutif de la pièce 8, la chaleur de l'arc électrique 5 permet de fondre le métal constitutif du fil d'apport 1. Le fil d'apport 1 est dévidé de manière continue en direction de l'arc électrique 5 à une vitesse de déplacement dite vitesse de fil. Il s'ensuit un transfert de métal fondu depuis l'extrémité du fil 1 vers le bain de métal fondu 2. Le bain liquide formé du métal de base de la pièce 8 et du métal d'apport du fil fusible fondu se solidifie et forme un dépôt de rechargement 6.

On obtient un dépôt 6 sur au moins une partie de la surface de la pièce 8 située en regard du fil 1 et de l'électrode 2 par déplacement relatif de l'ensemble formé par le fil 1 d'apport et l'électrode 4 par rapport à la surface de la pièce 8 à recharger. A noter que le dépôt de rechargement 6 peut comprendre un ou plusieurs cordons de soudure déposés successivement sur la pièce 8, lesdits cordons étant juxtaposés ou se recouvrant partiellement. Le dépôt de rechargement 6 peut en outre comprendre une couche ou plusieurs couches superposées les unes sur les autres.

En outre, le procédé met en oeuvre une protection gazeuse de l'arc électrique 5, du fil d'apport 1 et du bain 2 de métal fondu, ceci afin de les protéger de l'air ambiant.

L'argon (Ar) pur est classiquement envisagé en rechargement avec électrode non fusible pour des raisons essentiellement économique mais conduit dans de nombreux cas à des cordons irréguliers et de mauvais mouillage.

Les inventeurs de la présente invention ont mis en évidence que l'utilisation d'un mélange gazeux constitué de 20 à 70 % d'hélium (He) et d'argon pour le reste dans un procédé de rechargement à l'électrode non fusible conduisait à un accroissement substantiel de la productivité du procédé, ainsi qu'à une amélioration de l'aspect des dépôts de rechargement.

Une explication possible repose sur l'énergie d'ionisation de l'hélium supérieure à celle de l'argon. A longueurs et courants d'arc équivalents, la tension de soudage obtenue avec l'hélium est donc plus grande que celle obtenue avec l'argon. L'énergie de soudage étant directement liée au produit du courant par la tension d'arc, l'apport énergétique de l'hélium est donc plus important que celui de l'argon.

Toutefois, un tel raisonnement ne peut laisser prévoir l'effet significatif d'une proportion d'hélium comprise entre 20 et 70 % dans un mélange de protection Ar-He sur la productivité et l'amélioration du mouillage et de la régularité des dépôts de rechargement. En effet, en considérant que seulement 5 à 30 % de l'arc électrique sont ionisés, on comprend qu'une quantité minime d'atomes d'hélium est ionisée, ne produisant qu'un nombre limité d'ions He+.

De façon inattendue, c'est en réalité l'écart de conductivité thermique entre l'argon et l'hélium qui explique l'effet bénéfique d'un mélange gazeux constitué de 20 à 70 % d'hélium et d'argon pour le reste. En effet, la conductivité thermique des gaz monoatomiques tels que l'hélium et l'argon dépend du coefficient de diffusion des atomes, elle-même proportionnelle à la racine carrée de l'inverse de la masse de l'atome considéré. Ainsi, avec une masse atomique dix fois plus élevée que celle de l'hélium, l'argon a une conductivité thermique égale à environ 30 % de celle de l'hélium.

Or, la conductivité thermique influe sur les pertes radiales de chaleur depuis le centre de la colonne d'arc électrique vers sa périphérie. L'argon pur produit donc un arc caractérisé par une zone centrale chaude étroite et une zone périphérique rapidement bien plus froide. Lors d'une opération de rechargement à l'électrode non fusible, les profils de pénétration obtenus avec l'argon ont donc une forme peu étalée.

Les mélanges Ar-He possèdent des conductivités thermiques ayant des valeurs intermédiaires situées entre celle de l'argon et celle de l'hélium. L'utilisation d'un mélange Ar-He permet donc d'atteindre des températures plus élevées sur une zone plus étendue autour de la colonne d'arc qu'avec de l'argon seul. Il s'ensuit des profils de pénétration plus larges, un meilleur mouillage du ou des cordons formant le dépôt de rechargement ainsi qu'une vitesse de rechargement accrue du fait de l'apport énergétique plus important et de l'augmentation de la température du bain de soudage.

L'influence bénéfique de l'hélium sur la morphologie des dépôts et la productivité du procédé de rechargement est détectable à partir de 20 % d'hélium dans l'argon. Par contre, au-delà de 70 % d'hélium, il apparaît des difficultés d'amorçage ainsi que des instabilités de l'arc électrique. Selon l'invention, on met donc en oeuvre au cours d'un procédé de rechargement à l'arc électrique une protection gazeuse de l'électrode 4 non fusible, du fil d'apport 1 métallique fusible et du bain 2 de métal fondu avec un mélange gazeux constitué de 20 à 70 % (% en volume) d'hélium et d'argon pour le reste.

Avantageusement, ledit mélange gazeux contient au plus 50 % d'hélium, de préférence au plus 30 % d'hélium (% en volume). De telles proportions d'hélium dans le mélange gazeux de protection permettent de limiter l'augmentation du coût du gaz résultant de l'utilisation d'hélium, tout en améliorant significativement les performances de rechargement.

Selon l'invention, le transfert de métal fondu vers le bain 2 de métal fondu est opéré sous forme d'un pont liquide 3, ou d'une veine de métal liquide, entre le fil 1 d'apport et la zone de la pièce 8 à recharger de manière à avoir un contact permanent entre ledit bain 2 et l'extrémité fondue du fil d'apport 1. Dit autrement, le transfert de métal ne se fait pas goutte par goutte, mais selon un pont liquide 3 de métal en fusion.

Le transfert par pont liquide présente les avantages suivants :
- un point d'impact en dessous de l'arc, ce qui facilite le positionnement de l'électrode et du fil d'apport mis en oeuvre dans le procédé selon l'invention,
- un transfert ininterrompu de métal bien dirigé dans le bain,
- un aspect esthétique du cordon de soudage de haute qualité, c'est-à-dire une surface très lisse qui ne présente pas de stries consécutives aux dépôts successifs des gouttes de métal liquide,
- une présence constante d'une force de transfert par tension de surface qui facilite le travail en position.
- une facilité de réglage du paramètre de vitesse fil puisqu'un surplus de fil peut être absorbé dans le bain.
- la traversée par le fil des zones les plus chaudes de l'arc, ce qui a un effet de préchauffage sur le fil et implique un rendement et une vitesse accrues. Ce phénomène s'apparente au procédé dit « fil chaud » où le préchauffage est réalisé par effet joule dans le métal d'apport, alors que dans notre cas l'énergie de préchauffage est apportée directement par l'arc électrique.

Le transfert de métal par pont liquide peut être obtenu dans une plage de paramètres de vitesse d'amenée de fil large et élevée, typiquement au moins 3 m/min, par rapport aux vitesses d'amenée de fil utilisées en transfert goutte par goutte.

Comme on le voit sur la Figure, l'électrode 4 est orientée selon une première direction, de préférence perpendiculaire à la surface supérieure de la pièce 8. Dans le cas d'un rechargement de pièces maintenues à plat, i. e. horizontalement, la première direction de l'électrode 4 forme donc un angle de l'ordre de 0° avec la verticale. De manière alternative, l'angle formé par ladite première direction de l'électrode 4 avec la verticale peut être non nul et prendre des valeurs allant jusqu'à 15° de part et d'autre de la direction la verticale.

Le fil d'apport 1 est orienté selon une deuxième direction, lesdites première et deuxième directions étant de préférence sensiblement coplanaires. Préférentiellement, le plan contenant les première et deuxième directions est perpendiculaire à la surface de la pièce 8. De manière alternative, ledit plan peut former un angle non nul allant jusqu'à 15° avec la direction perpendiculaire à surface supérieure de la pièce 8.

Le transfert par pont liquide 3 est de préférence obtenu en guidant l'extrémité du fil d'apport 1 de manière à former un angle α compris entre 5 et 50° par rapport à l'axe de l'électrode 4, comme illustré sur la Figure. On évite ainsi que le fil d'apport 1 soit dirigé d'une manière parallèle ou horizontale par rapport à la surface de la ou des pièces à souder et touche donc le bain de fusion sans transférer dans l'arc.

De préférence, l'amenée de fil se fait selon un angle α allant de 10° à 20°, de préférence encore allant de 15° à 20°, par rapport à l'axe de l'électrode 4.

Conformément à la présente invention, pour obtenir un transfert de métal par pont liquide 3 efficace, l'extrémité du fil d'apport 1 est guidée et maintenue en permanence à une distance D inférieure à 2 mm par rapport à l'extrémité de l'électrode 4, c'est-à-dire que la distance entre la surface externe du fil fusible et l'électrode ne doit pas excéder 2 mm environ, de préférence être de l'ordre de 1 mm. En effet, si la distance D fil/électrode devient trop importante, c'est-à-dire supérieure à 2 mm, il devient plus difficile d'obtenir un transfert par pont liquide efficace et durable.

De préférence, l'extrémité de l'électrode 4 non fusible est positionnée à l'avant de l'amenée de fil d'apport 1 selon la direction de rechargement et se déplace simultanément à celui-ci. Un tel positionnement limite les perturbations des écoulements de métal fondu et de maintenir une vitesse de déplacement de l'ensemble électrode-fil élevée sans générer de défaut au niveau du dépôt.

De manière optionnelle, le procédé selon l'invention peut comprendre une étape de préchauffage du fil d'apport 1 avant sa fusion par l'arc électrique 5, de préférence au moyen d'un échauffement du fil reposant sur l'effet Joule. L'amenée d'un fil soumis à une source de chaleur supplémentaire permet d'augmenter la vitesse de fil maximale.

L'application principale de la présente invention est un procédé de rechargement de pièces 8 formées de différents matériaux métalliques, notamment de pièces en alliages ferreux, de préférence en acier inoxydable ou en acier au carbone, en alliages base nickel, ou en alliages base cobalt.

Le dépôt métallique 6 peut comprendre une ou plusieurs couches métalliques superposées, être formé d'acier inoxydable, d'un alliage base nickel, ou d'un alliage base cobalt, et avoir une épaisseur comprise entre 1 et 20 mm, de préférence entre 5 et 15 mm.

La teneur en hélium du mélange gazeux de protection selon l'invention pourra éventuellement être adaptée selon le niveau de performance de rechargement souhaité. Plus l'application visée exige des dépôts exempts ou avec très peu de défauts, un excellent mouillage et/ou un taux de dépôt élevé, plus la proportion d'hélium dans le mélange gazeux de protection doit être augmentée. S'il est important pour la productivité globale de l'installation de rechargement de maintenir un coût raisonnable pour le mélange gazeux de protection, on utilisera plutôt une proportion d'hélium dans le mélange gazeux de protection de 50 % au plus, de préférence 30 % au plus.

Au cours de l'opération de soudage, l'arc électrique 5 est protégé par un flux de mélange gazeux de protection avantageusement distribué à un débit compris entre 6 et 12 1/min.

Le procédé de rechargement selon l'invention est avantageusement opéré avec une torche TIG (non illustrée). La torche TIG comprend, en son extrémité située en regard des pièces 8 à recharger, l'électrode non fusible 4 ainsi qu'une buse apte à distribuer le gaz de protection. La torche TIG est reliée électriquement à au moins un générateur de courant délivrant un courant lisse ou pulsé, d'une intensité de l'ordre de 200 à 400 A, laquelle torche est également reliée fluidiquement à au moins une source de gaz. L'ensemble de ces éléments, à savoir torche de soudage, générateur de courant, source de gaz, ainsi que les câbles d'alimentations électriques, les circuits d'alimentation en gaz et les éléments mécaniques tels que bâti-supports et/ou poutre mobile et/ou bras robotisé sur lesquels est agencée la torche sont compris dans un ensemble appelé installation de rechargement TIG. La torche TIG peut être commandée manuellement ou par une commande numérique apte à et conçue pour contrôler le déplacement de la torche TIG. Le procédé selon l'invention peut être manuel, automatique, voir robotisé.

Dans le cadre d'un transfert par pont liquide 3 conformément à l'invention, le procédé de l'invention est préférentiellement mis en oeuvre avec une torche TIG avec fil d'apport 1 traversant la paroi de la buse de distribution du mélange gazeux de protection selon un angle α de moins de 50°, par exemple une torche similaire ou identique à celle décrite dans le document EP-A-1459831.

Afin de démontrer l'efficacité du procédé selon l'invention pour recharger des pièces métalliques, des essais de rechargement ont été menés sur des pièces d'une épaisseur de 60 mm, formés d'acier inoxydable du type 304L.

Un premier essai de rechargement a été réalisé sur une pièce en d'acier inoxydable 304L avec un fil d'apport de 1.2 mm de diamètre. Les paramètres de rechargement étaient les suivants :
- le mélange gazeux de protection contenait 20 % d'hélium et 80 % d'argon (% en volume), correspondant au mélange ARCAL32 commercialisé par AIR LIQUIDE,
- la distance D séparant l'électrode de l'extrémité du fil était de 1 mm,
- l'angle α formé entre l'axe de l'électrode non fusible et le fil d'apport était de 20°,
- l'axe de l'électrode était perpendiculaire à la surface du pièce à recharger, i. e. formait un angle de 0° avec la verticale,
- l'angle d'affûtage de l'électrode TIG était de 40°,
- la torche TIG était alimentée par un courant lisse d'une intensité de 400 A,
- la tension d'arc était de l'ordre de 16 V,
- la vitesse de déplacement de l'électrode et de l'extrémité du fil fusible, i. e. la vitesse de déplacement de la torche, par rapport à la surface du pièce était de 1 m/min,
- la distance entre l'extrémité de l'électrode 2c et les pièces à souder était de 3 mm,
- la vitesse de dévidage du fil fusible était de 3,5 m/min,
- le taux de dépôt était de 4.5 kg/h.

Le dépôt métallique obtenu lors de ces essais présentait un aspect régulier, de bonnes caractéristiques métallurgiques, un meilleur mouillage et un taux de dilution de l'ordre de 10 %. La pièce revêtue était exempte de déformations.

Ces résultats prouvent que l'utilisation d'un mélange de protection comprenant au moins 20 % d'hélium permet d'améliorer la morphologie des dépôts réalisés et d'augmenter la chaleur apportée par l'arc au bain de fusion, ce qui permet notamment d'augmenter la vitesse de dévidage du fil, la vitesse de rechargement et/ou le taux de dépôt. En particulier, l'utilisation d'un mélange de protection comprenant au moins 20 % d'hélium influe de façon significative sur le mouillage des dépôts, ce qui permet d'avoir une géométrie de surface présentant peu voire pas de creux ou de bosses.

Un deuxième essai de soudage a été réalisé avec un mélange gazeux de protection contenant 70 % d'hélium et 30 % d'argon (% en volume), correspondant au mélange ARCAL37 commercialisé par AIR LIQUIDE, toutes les conditions étant égales par ailleurs. Un taux d'hélium plus élevé conduit à un mouillage encore meilleur et à une vitesse d'avance encore accrue.

D'autres essais ont été réalisés avec des mélanges gazeux contenant moins de 20% d'hélium ou plus de 70 % d'hélium. A moins de 20 % d'hélium, l'influence de l'hélium sur la morphologie des dépôts et la productivité du procédé de rechargement n'est pas détectable. A plus de 70 % d'hélium, il apparaît des difficultés d'amorçage ainsi que des instabilités de l'arc électrique.

Les résultats de ces essais confirment l'intérêt de l'utilisation d'un mélange gazeux He-Ar pour améliorer les performances d'un procédé de rechargement en termes de productivité et de morphologies des dépôts réalisés, la concentration en hélium du mélange de protection devant être comprise entre 20 et 70 %.

## Revendications

1. Procédé de rechargement d'au moins une partie d'une pièce (8) métallique, ledit procédé mettant en oeuvre une électrode (4) non fusible, un fil d'apport (1) métallique fusible, et un arc électrique (5) établi entre l'électrode (4) et la pièce (8) de manière à produire un bain (2) de métal fondu, l'extrémité du fil métallique d'apport (1) étant fondue par l'arc électrique (5) de manière à réaliser un transfert de métal fondu depuis le fil d'apport (1) vers le bain (2) de métal fondu et à revêtir au moins une partie de la pièce (8) d'un dépôt (6) métallique, **caractérisé en ce qu'**il met en oeuvre une protection gazeuse de l'électrode (4), du fil d'apport (1) et du bain (2) avec un mélange gazeux constitué de 20 à 70 % d'hélium, et d'argon pour le reste (% en volume), le transfert de métal fondu vers le bain (2) de métal fondu étant opéré par pont liquide (3) de manière à avoir un contact permanent entre ledit bain (2) et l'extrémité fondue du fil d'apport (1), ladite extrémité du fil d'apport (1) étant guidée et maintenue en permanence à une distance (D) inférieure à 2 mm par rapport à l'extrémité de l'électrode (4).

2. Procédé selon la revendication 1, **caractérisé en ce que** ledit mélange gazeux contient au plus 50 % d'hélium (% en volume).

3. Procédé selon l'une des revendications précédentes, **caractérisé en ce que** ledit mélange gazeux contient au plus 30 % d'hélium (% en volume).

4. Procédé selon l'une des revendications précédentes, caractérisé en que l'extrémité du fil d'apport (1) est guidée de manière à former un angle compris entre 5 et 50° par rapport à l'axe de l'électrode (4).

5. Procédé selon l'une des revendications précédentes, caractérisé en que l'extrémité du fil d'apport (1) est guidée de manière à former un angle compris entre 10 et 25° par rapport à l'axe de l'électrode (4).

6. Procédé selon l'une des revendications précédentes, **caractérisé en ce que** l'électrode (4) non fusible est en tungstène.

7. Procédé selon l'une des revendications précédentes, **caractérisé en ce que** la pièce (8) à recharger et/ou le dépôt métallique (6) déposé sur ladite pièce (8) est en acier au carbone, en acier inoxydable, en alliage base nickel ou en alliage base cobalt.

8. Procédé selon l'une des revendications précédentes, **caractérisé en ce que** le dépôt (6) métallique a une épaisseur comprise entre 1 et 20 mm, de préférence entre 5 et 15 mm.

## Patentansprüche

1. Verfahren für Oberflächenbehandlung mindestens eines Teils eines Metallteils (8), wobei das Verfahren eine Nicht-Schmelz-Elektrode (4), einen metallischen Schmelzschweißdraht (1) und einen zwischen der Elektrode (4) und dem Metallteil (8) angeordneten Lichtbogen (5) durchführt, um ein Bad (2) aus geschmolzenem Metall zu erzeugen, wobei das Ende des metallischen Schweißdrahtes (1) durch den Lichtbogen (5) geschmolzen wird, um eine Übertragung von geschmolzenem Metall vom Schweißdraht (1) auf das Bad (2) aus geschmolzenem Metall zu bewirken und mindestens einen Teil des Metallteils (8) mit einer Metallablagerung (6) zu beschichten, **dadurch gekennzeichnet, dass** es einen Gasschutz der Elektrode (4), des Schweißdrahtes (1) und des Bades (2) mit einem Gasgemisch, bestehend aus 20 bis 70 % Helium, und Argon als Rest (Vol-%) durchführt, wobei die Übertragung von geschmolzenem Metall auf das Bad (2) aus geschmolzenem Metall durch eine Flüssigkeitsbrücke (3) so ausgeführt wird, dass ein ständiger Kontakt zwischen dem Bad (2) und dem geschmolzenen Ende des Schweißdrahtes (1) herrscht, wobei das Ende des Schweißdrahtes (1) geführt und dauerhaft in einem Abstand (D) von weniger als 2 mm in Bezug auf das Ende der Elektrode (4) gehalten wird.

2. Verfahren nach Anspruch 1, **dadurch gekennzeichnet, dass** das Gasgemisch höchstens 50 % Helium (Vol-%) enthält.

3. Verfahren nach einem der vorstehenden Ansprüche, **dadurch gekennzeichnet, dass** das Gasgemisch höchstens 30 % Helium (Vol-%) enthält.

4. Verfahren nach einem der vorstehenden Ansprüche, **dadurch gekennzeichnet, dass** das Ende des Schweißdrahtes (1) so geführt wird, dass es einen Winkel zwischen 5 und 50° in Bezug auf die Achse der Elektrode (4) bildet.

5. Verfahren nach einem der vorstehenden Ansprüche, **dadurch gekennzeichnet, dass** das Ende des Schweißdrahtes (1) so geführt wird, dass es einen Winkel zwischen 10 und 25° in Bezug auf die Achse der Elektrode (4) bildet.

6. Verfahren nach einem der vorstehenden Ansprüche, **dadurch gekennzeichnet, dass** die Nicht-Schmelz-Elektrode (4) aus Wolfram ist.

7. Verfahren nach einem der vorstehenden Ansprüche, **dadurch gekennzeichnet, dass** das zu behandelnde Metallteil (8) und/oder die auf dem Metallteil (8) abgelagerte Metallablagerung (6) aus Kohlenstoffstahl, Edelstahl, Nickelbasislegierung oder Kobaltbasislegierung ist.

8. Verfahren nach einem der vorstehenden Ansprüche, **dadurch gekennzeichnet, dass** die Metallablagerung (6) eine Dicke zwischen 1 und 20 mm, vorzugsweise zwischen 5 und 15 mm aufweist.

## Claims

1. Method for cladding at least one part of a metal part (8), said method implementing a non-meltable electrode (4), a metal meltable filler wire (1), and an electric arc (5) established between the electrode (4) and the part (8) so as to produce a molten metal pool (2), the end of the metal filler wire (1) being melted by the electric arc (5) so as to achieve a transfer of molten metal from the filler wire (1) to the molten metal pool (2) and to coat at least one part of the part (8) with a metal deposit (6), **characterised in that** it implements a gaseous protection of the electrode (4), of the filler wire (1) and of the pool (2) with a gaseous mixture constituted of 20 to 70% helium, and argon for the remainder (% by volume), the transfer of molten metal to the molten metal pool (2) being done by liquid bridge (3) so as to have a permanent contact between said pool (2) and the melted end of the filler wire (1), said end of the filler wire (1) being guided and permanently kept at a distance (D) less than 2mm with respect to the end of the electrode (4).

2. Method according to claim 1, **characterised in that** said gaseous mixture contains at most 50% helium (% by volume).

3. Method according to one of the preceding claims, **characterised in that** said gaseous mixture contains at most 30% helium (% by volume).

4. Method according to one of the preceding claims, **characterised in that** the end of the filler wire (1) is guided so as to form an angle of between 5 and 50° with respect to the axis of the electrode (4).

5. Method according to one of the preceding claims, **characterised in that** the end of the filler wire (1) is guided so as to form an angle of between 10 and 25° with respect to the axis of the electrode (4).

6. Method according to one of the preceding claims, **characterised in that** the non-meltable electrode (4) is made of tungsten.

7. Method according to one of the preceding claims, **characterised in that** the part (8) to be cladded and/or the metal deposit (6) deposited on said part (8) is made of carbon steel, stainless steel, nickel-based alloy or cobalt-based alloy.

8. Method according to one of the preceding claims, **characterised in that** the metal deposit (6) has a thickness of between 1 and 20mm, preferably between 5 and 15mm.
